Europäisches Patentamt

European Patent Office

Office européen des brevets

(19)

(11) EP 0 877 229 A1

(12) EUROPEAN PATENT APPLICATION

(43) Date of publication:
11.11.1998 Bulletin 1998/46

(51) Int. Cl.$^6$: G01D 5/165

(21) Application number: 98107855.3

(22) Date of filing: 29.04.1998

(84) Designated Contracting States:
AT BE CH CY DE DK ES FI FR GB GR IE IT LI LU MC NL PT SE
Designated Extension States:
AL LT LV MK RO SI

(30) Priority: 05.05.1997 IT MI971039

(71) Applicant: Gefran Sensori S.r.l.
25050 Provaglio d'Iseo (Brescia) (IT)

(72) Inventor: Piana, Ermete
25049 Iseo, Brescia (IT)

(74) Representative:
Modiano, Guido, Dr.-Ing. et al
Modiano & Associati SpA
Via Meravigli, 16
20123 Milano (IT)

(54) Contactless potentiometric position transducer device with high linearity

(57) A contactless position transducer having high transduction linearity, comprising a resistive track (2) provided with a capacitive wiper (4) which can slide without contact thereon, the particularity of which is the fact that the resistive track (2) is supplied, at its terminals, with a potential difference (Uref1-Uref2) in order to transfer charge to the capacitor of the wiper, and in that it also comprises high-gain amplifier means (10) to which rectifier means (11) and integrator means (12) are cascade-connected; the output of the integrator means (12) is fedback to both terminals of the resistive track (2); the rectifier means (11) allow to transfer to the resistive track (2) a voltage which corresponds to the charge transferred to the capacitor of the wiper (4) as a consequence of the initial application of the potential difference, the voltage value that corresponds to the charge being proportional to the position of the wiper (4) along the resistive track (2).

FIG.7

## Description

The present invention relates to a potentiometric position transducer device of the contactless type with high transduction linearity.

It is known that transducers are devices which can convert one form of energy into another: when their function is to detect the value of an input quantity and convert it into a value of another quantity, they are also known as measurement transducers or sensors.

The characteristic parameters of a transducer are: the physical quantity measured, the operating range, the reference value (zero setting), the transfer function or static characteristic (relation between the electric output quantity in output and the physical quantity in input), type of output signal (analog or digital), sensitivity, resolution, error, dynamic characteristic (response time, rise time, settling time, time constant, damping characteristics, frequency response) and drift.

Among the various kinds of transducer, one of the most widely used is the resistive one, which can be provided for example by means of a potentiometer in which the output voltage is a function of the movement of a wiper. The movement can be linear or angular and the output quantity can have a linear or logarithmic or exponential behavior.

The advantages of potentiometric transducers are low cost, high output voltages, the possibility to operate with AC or DC supply, and easy calibration.

The drawbacks of this kind of transducer are high friction, high noise, wear, sensitivity to vibrations and limited frequency response.

Potentiometric transducers are generally used to detect the following quantities: linear and angular movements; positions; angular velocities and accelerations.

Capacitive transducers are also known which do not require physical contact for transduction and in which a change in capacitance causes a change in frequency.

Instead of the brush that slides on the resistive element, in capacitive transducers the signal is acquired with a capacitive wiper, which receives a charge which is a function of the position along the measurement path, exactly as in the contact-type system.

The advantages of this solution are substantially of two kinds:

a) all the problems of electrical and mechanical wear, typical of the resistive collector track, are eliminated. This allows to use it even in the increasingly numerous applications in which speed, acceleration and cycle rate have up to now prevented or strongly limited the use of potentiometric transducers.

b) improvement in microlinearity and microgradient values of the transduced signal, which is no longer influenced by electrical contact spot noise.

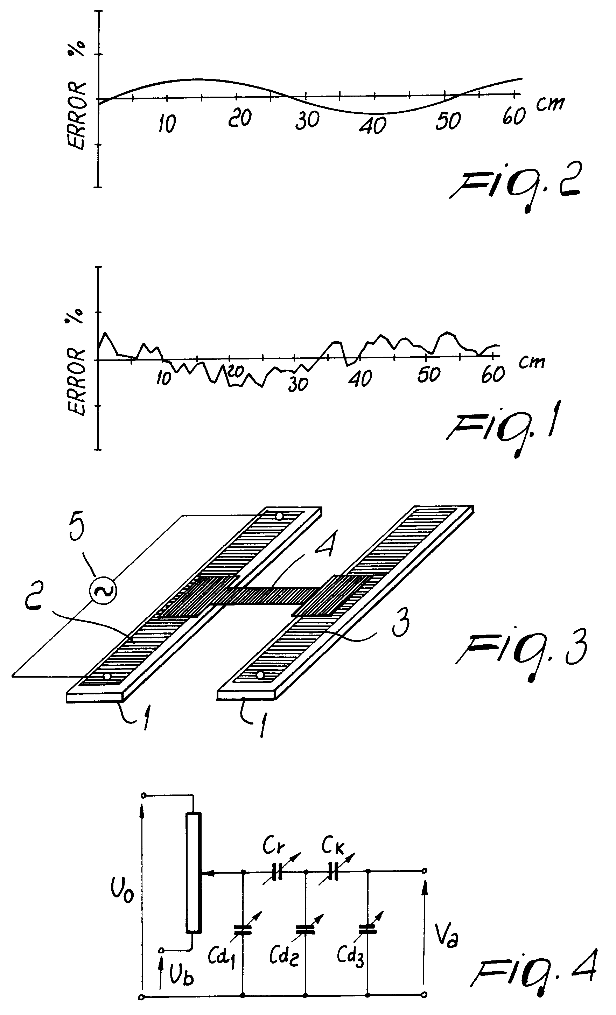

In this regard, the charts of Figures 1 and 2 plot the nonlinearity error of a potentiometric transducer of the contact and contactless types, respectively, in which the axis of the ordinates plots the percentage error, whilst the axis of the abscissae plots the length of the measurement track in centimeters.

Figure 3 instead shows the transduction system of the contactless type, which comprises a metallic support 1 which accommodates the potentiometric track 2 and the collector track 3, and a moving wiper 4 with two metal plates which are mutually electrically connected; each plate faces one of the tracks.

The moving wiper 4 slides on the tracks without making contact therewith.

The capacitance of the wiper 4 is therefore the resultant of the series formed by the two capacitors that each plate forms with the underlying track.

A voltage source 5 supplies the terminals of the potentiometric track 2.

Figure 4 is a view of the equivalent circuit of the embodiment shown in Figure 3.

In Figure 4, Cr and Ck are, respectively, the cursor-potentiometric track capacitor and the cursor-collector track capacitor. Cd1, Cd2 and Cd3 are instead the parasitic capacitors, distributed toward the ground of the resistive track 2, of the wiper 4 and of the collector track 3, respectively. The values of Cd1 and Cd3 are very high, with very high variability along the transduction path.

For this reason, the signal Va is very small and variable and the correctness and stability of the output signal of the transducer depend exclusively on the quality of the electronic measurement circuit that detects Va.

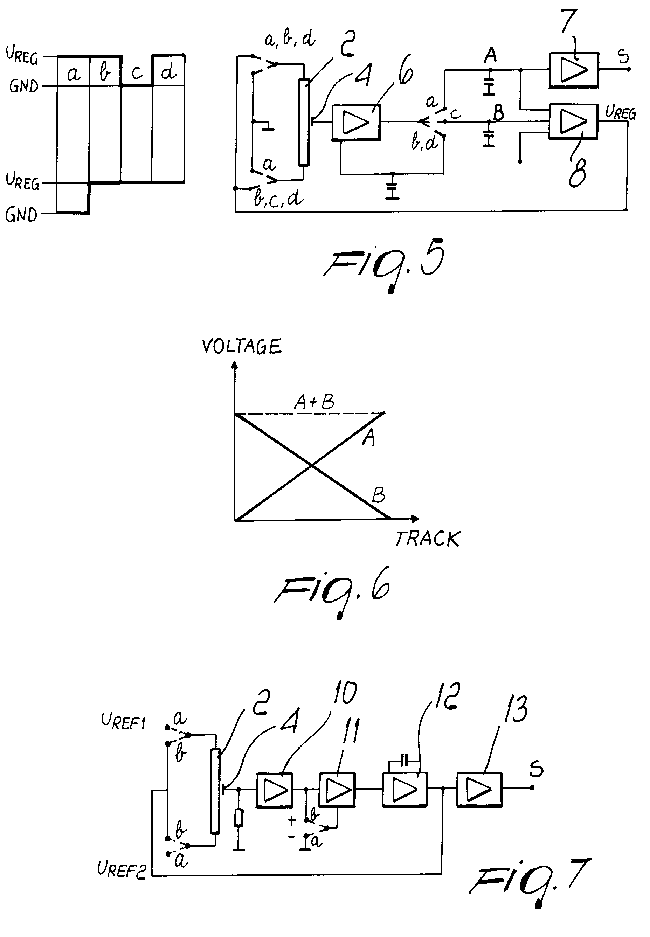

An example of contactless position transducer is given by the circuit solution shown as a block diagram in Figure 5, in which four measurements steps are used; said steps are designated by a, b, c and d in the left portion of said figure and are indicated in the right portion of said figure.

During steps a and c, the resistive track 2 is supplied with a square-wave AC voltage with a 180° offset so as to obtain, with two successive measurements, a voltage value which corresponds to the position of the wiper with respect to each one of the two ends of the resistive track 2. The charge, transferred onto the collector track, is converted into a voltage by an integrator followed by an amplifier (both of which are generally designated by the reference numeral 6) and synchronously stored with a sample and hold circuit (A and B). Steps b and d allow to reset the integrator between one measurement cycle and the next.

The measurement signal in output is designated by S and is obtained in output from an amplifier/buffer circuit 7.

The chart of Figure 6 plots the two voltages A and B and shows that they are exactly mirror-symmetrical; since the voltages always represent the same total movement path, in the absence of errors their sum must always be constant.

A PI regulator and adder circuit 8, which compares the stored values of A and B with a highly stabilized reference voltage, allows to keep the sum of A and B constant. The output of the circuit 8 controls by feedback the amplitude of the AC supply voltage of the resistive track 2.

Although the above described system provides good transduction results, it has some drawbacks.

First of all, the adjustment dynamics (range of the output voltage) of the PI circuit 8 is necessarily limited by the supply voltage and by the gain of the input stage.

Furthermore, since the total capacitance of the wiper is very low whilst the distributed parasitic capacitances are high and highly variable (since they are linked to the physical length of the transducer), it is necessary to adapt both the value of the capacitance of the input integrator 6 and the subsequent gain according to the type of transducer used (i.e., according to its length and to the dielectric that is used).

Finally, since it must measure and quantize the charge transferred in steps a and c, the system must constantly charge and discharge the considerable parasitic capacitances of the resistive track and of the collector track. This entails a distributed and non-distributed shunt effect which alters the linearity of the resulting transduction, especially at the ends of the stroke of the wiper.

The aim of the present invention is therefore to provide a potentiometric position transducer of the capacitive contactless type which offers high transduction linearity.

Within the scope of this aim, an object of the present invention is to provide a potentiometric position transducer of the contactless type which does not require a compensation voltage variation as in a PI regulator.

Another object of the present invention is to provide a potentiometric position transducer of the contactless type in which the transduction circuit can be adapted without any modification to transducers of different lengths and kinds.

Another object of the present invention is to provide a potentiometric position transducer of the contactless type in which the measurement error introduced by the presence and variation of parasitic capacitances is as limited as possible.

Another object of the present invention is to provide a potentiometric position transducer of the contactless type which is highly reliable and relatively easy to manufacture at competitive costs.

This aim, these objects and others which will become apparent hereinafter are achieved by a contactless position transducer having high transduction linearity, comprising a resistive track provided with a capacitive wiper which can slide without contact thereon, characterized in that said resistive track is supplied, at its terminals, with a potential difference in order to transfer charge to the capacitor of said wiper, and in that it also comprises high-gain amplifier means to which rectifier means and integrator means are cascade-connected, the output of said integrator means being fedback to both terminals of said resistive track, said rectifier means allowing to transfer to said resistive track a voltage which corresponds to the charge transferred to the capacitor of said wiper as a consequence of the initial application of said potential difference, the voltage value that corresponds to said charge being proportional to the position of said wiper along the resistive track.

Further characteristics and advantages of the invention will become apparent from the description of a preferred but not exclusive embodiment of the device according to the invention, illustrated only by way of non-limitative example in the accompanying drawings, wherein:

Figure 1 is a chart which plots the error in a conventional contact potentiometer;
Figure 2 is a chart which plots the error in a contactless-type potentiometer according to the present invention;
Figure 3 is a perspective view of the contactless-type position transducer used in the present invention as well;
Figure 4 is a view of the equivalent circuit of the transducer of Figure 3;
Figure 5 is a circuit diagram of a conventional contactless position transducer;
Figure 6 is a chart of the voltages obtained in the conventional device of Figure 1;
Figure 7 is a block diagram of the transducer according to the present invention; and

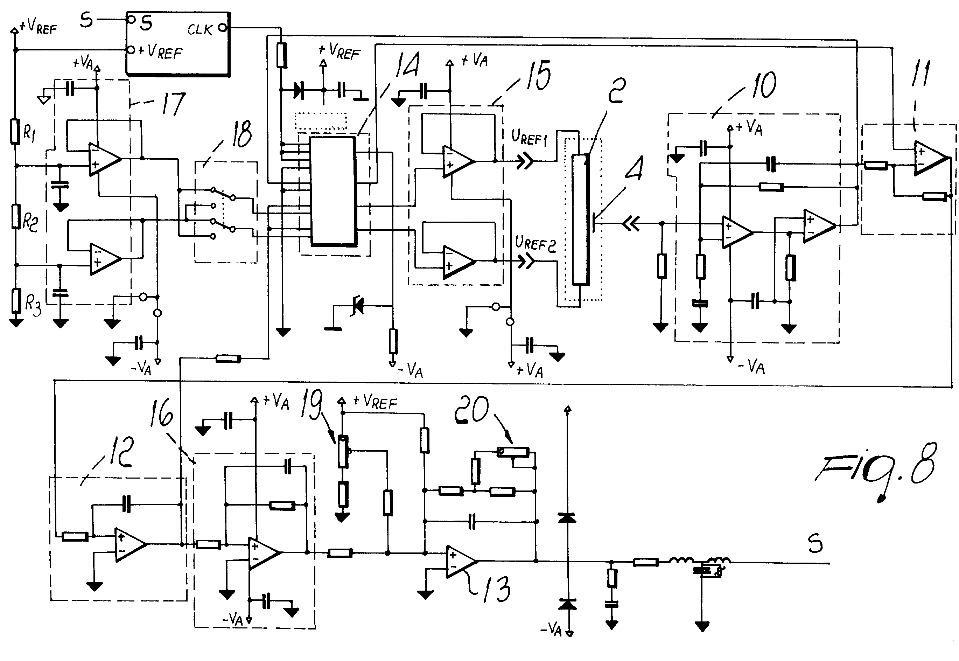

Figure 8 is a circuit diagram of the transducer according to the present invention.

Figures 1 to 6 have already been described earlier and therefore are not described further hereinafter to avoid redundant explanation.

Accordingly, with reference to Figures 7 and 8, the transducer according to the present invention comprises a resistive track (again designated by the reference numeral 2), and a collector track (not shown) on which a capacitive wiper 4 slides without contact. A highly stabilized potential difference (Uref1-Uref2) is applied to the terminals of the resistive track 2.

The charge transferred onto the capacitor of the wiper 4 is sent to a high-gain amplifier circuit 10 and then passes through a synchronous rectifier 11 and then through an integrator 12, whose output is connected to a normalization stage which is constituted by an amplifier/buffer 13, finally obtaining the measurement signal S in output.

With reference to Figure 8, the reference symbols R1, R2 and R3 designate a resistive divider with associated buffer 17 for generating the voltages Uref1 and Uref2 from which the potential difference Uref1-Uref2, to be applied in a first operating step to the terminals of the resistive track 2, is obtained.

The switch 18 has the purpose of selecting the zero and maximum-value end as regards the direction of variation of the output voltage.

The reference numeral 14 designates an integrated circuit for switching the operating steps (first step and second step), provided with a corresponding buffer 15 which allows to eliminate the errors due to the internal resistance of the integrated circuit 14. Said integrated circuit includes three switches for switching from step a to step b in the three points of the circuit that are highlighted in Figure 7.

The block 16 inverts the voltage in output from the integrator circuit 12 in order to allow the circuit 13 with the trimmers 19 and 20 to calibrate the output value of the transduction signal S.

With reference to Figures 7 and 8, the operation of the transducer according to the present invention is as follows.

In a first step, step a, a potential difference (a highly stabilized low-value one) (Uref1-Uref2) is supplied to the resistive track 2, which acts as a divider for the charge transferred to the capacitor of the wiper. The charge transferred to the capacitor of the wiper, converted into a voltage, is highly amplified before being rectified in a synchronous rectifier, which sends a negative rectified voltage to the integrator 12. Since the integrator also has a high gain, total amplification is very high.

The output of the integrator 12 is connected, in step b, to both terminals of the resistive track 2, which thus acts as passive resistor.

During step b, the synchronous rectifier 11 inverts the signal in input to the integrator 12.

Therefore, to allow the system to be in equilibrium, the charge transferred onto the capacitor of the wiper 4 in step a must be equal to the charge transferred in step b, and therefore the voltage value provided at the resistive track 2 must be exactly equal to the one obtained from the potentiometric division performed in step a.

In this manner, a balancing is provided which is similar to the balancing performed with scales in which a weight of unknown value is placed on one pan and in order to balance the imbalance of the other pan it is necessary to place in contrast a weight which eliminates the imbalance.

In this case, the potential difference applied in input during step 1 to the resistive track 2 causes an imbalance in the system, with a charge transfer whose value is proportional to the position of the wiper 4 along the resistive track 2 and corresponds to a value of potentiometric division of the input potential difference.

At this point, balancing of the system is achieved, with step b, by returning in input to the resistive track a voltage which is exactly equal in value to the one obtained by means of the potentiometric division of step a. During this step b, the supply of the potential difference in input to the terminals of the resistive track is interrupted by means of the switches that are present in the integrated circuit 14.

In our case, the amplification chain constituted by the amplifier 10, by the rectifier 11 and by the integrator 12 has the purpose of highly amplifying the potential difference ($\Delta Vx$) which is obtained, as a consequence of the charge transfer, on the wiper 4 in step b (Vbx) with respect to the potential difference transferred in step a (Vax), so as to achieve its canceling with high speed and resolution ($\Delta Vx = Vbx-Vax$).

This canceling occurs only when the system is in equilibrium, i.e., when the voltage in output from the integrator 12, applied to the terminals of the resistive track in step b, is perfectly equal to the voltage obtained by the potentiometric division of the reference voltage in step a.

Since said reference voltage (Uref1-Uref2) is known and stable, the value of the output S (normalized in the block 16) is an exact measurement, in terms of voltage, of the mechanical position of the wiper along the travel axis.

In practice it has been found that the transducer according to the invention fully achieves the intended aim, since it allows to achieve highly linear and sensitive position transduction without having to adapt the transduction circuit to the various lengths and types of transducer.

Furthermore, the absence of any kind of quantization of the charge transferred onto the capacitor of the wiper allows to eliminate the dependence of the transduction signal on the charging and discharging of the parasitic capacitors of the tracks, thus allowing to achieve high transduction linearity.

The charge-balancing technique used in the transducer according to the present invention thus allows to achieve better results than conventional kinds of system, with the advantage of using only two operating steps.

The device thus conceived is susceptible of numerous modifications and variations, all of which are within the scope of the inventive concept; all the details may furthermore be replaced with other technically equivalent elements.

In practice, the materials used, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A contactless position transducer having high transduction linearity, comprising a resistive track provided with a capacitive wiper which can slide without contact thereon, characterized in that said resistive track is supplied, at its terminals, with a potential difference in order to transfer charge to the capacitor of said wiper, and in that it also comprises high-gain amplifier means to which rectifier means and integrator means are cascade-connected, the output of said integrator means being fedback to both terminals of said resistive track, said rectifier means allowing to transfer to said resistive track a voltage which corresponds to the charge transferred to the capacitor of said wiper as a consequence of the initial application of said potential difference, the voltage value that corresponds to said charge being proportional to the position of said wiper along the resistive track.

2. A transducer according to claim 1, characterized in that said rectifier means comprise means for inverting the input signal.

3. A transducer according to claim 1, characterized in that it also comprises means for normalizing the signal in output from said integrator means.

4. A transducer according to claim 1, characterized in that said amplifier means and said integrator means have a high gain, such as to highly amplify the voltage obtained by each transfer of charge to the capacitor of the wiper.

5. A transducer according to claim 1, characterized in that it comprises switching means for switching from the first operating step to the second operating step, for feeding back to said resistive track a voltage value which corresponds to the charge transferred to the capacitor of said wiper.

6. A transducer according to claim 1, characterized in that it comprises means for generating a first reference voltage and a second reference voltage from which said potential difference to be applied to the terminals of said resistive track can be obtained.

7. A method for measuring position by means of a contactless potentiometric transducer according to claim 1, characterized in that it comprises the steps of:

-- applying a potential difference to the terminals of the resistive track of said transducer, so as to transfer a charge to the capacitor of the wiper of said track, said charge being proportional to a potentiometric division performed on the potential difference supplied in input to the terminals of said resistive track, by virtue of the position of the wiper on said track;

-- highly amplifying the voltage obtained from each transfer of charge to the capacitor of the wiper and sending it to a synchronous rectifier and to an integrator;

-- feeding back to the terminals of said resistive track a voltage value which corresponds to said transferred charge in order to achieve balancing;

the measurement signal in output from the integration step being proportional to the position of said wiper along the resistive track.

8. A method according to claim 7, characterized in that said synchronous rectifier alternately inverts the sign of the signal in input thereto.

9. A method according to claim 7, characterized in that during said feedback step a voltage value is fedback to both terminals of said resistive track, interrupting the supply of said potential difference to said resistive track.

*Fig. 2*

*Fig. 1*

*Fig. 3*

*Fig. 4*

Fig.5

Fig.6

Fig.7

7

Fig. 8

EP 0 877 229 A1

**European Patent Office**

**EUROPEAN SEARCH REPORT**

Application Number

EP 98 10 7855

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB 2 241 337 A (FERRANTI INTERNATIONAL PLC) 28 August 1991<br>* figure 2 * | 1,3-5,7 | G01D5/165 |
| Y | * page 13, line 10 - line 19 *<br>* page 13, line 24 - line 28 *<br>* page 12, line 26 - line 29 *<br>* page 12, line 5 - line 8 *<br>* page 14, line 12 - line 20 *<br>* page 12, line 3 - line 4 *<br>--- | 2,6,8 | |
| Y | US 5 049 827 A (TASMA) 17 September 1991<br>* column 5, line 9 - line 10 *<br>* column 5, line 29 - line 36 *<br>* figure 2 *<br>--- | 2,8 | |
| Y | PATENT ABSTRACTS OF JAPAN<br>vol. 95, no. 2, 31 March 1995<br>& JP 06 318348 A (SONY CORP), 15 November 1994<br>* abstract *<br>--- | 6 | |
| A | EP 0 711 978 A (HORST SIEDLE KG) 15 May 1996<br>* figure 4 *<br>----- | 9 | **TECHNICAL FIELDS SEARCHED (Int.Cl.6)**<br><br>G01D |

The present search report has been drawn up for all claims

| Place of search | Date of completion of the search | Examiner |
|---|---|---|
| THE HAGUE | 5 August 1998 | Lut, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document